# EUROPEAN PATENT SPECIFICATION

(11) **EP 1 521 429 B1**
(45) Date of publication and mention of the grant of the patent: **23.12.2009**
(21) Application number: 04104820.8
(22) Date of filing: 01.10.2004
(51) Int. Cl.: H04L 29/12, H04L 29/06, H04W 12/04

(54) **Delivering additional information needed in connection setup**
Liefern von Zusatzinformationen notwendigen für Verbindungsaufbau
Délivrance d'informations supplémentaires necessaire pour établissement d'une connexion

(30) Priority: 03.10.2003 FI 20031437
(43) Date of publication of application: 06.04.2005
(73) Proprietor: TeliaSonera Finland Oyj, 00510 Helsinki (FI)
(72) Inventor: Korhonen, Jouni, 11100, Riihimäki (FI); Jalkanen, Tero, 00790, Helsinki (FI); Järviranta, Juha-Matti, 00790, Helsinki (FI)
(74) Representative: Äkräs, Tapio Juhani

(56) References cited:
- WO-A2-99/30460
- ZAO J ET AL: "A PUBLIC-KEY BASED SECURE MOBILE IP" WIRELESS NETWORKS, ACM, US, vol. 5, no. 5, October 1999 (1999-10), pages 373-390, XP000902493 ISSN: 1022-0038
- EASTLAKE D: "RFC 2535 - Domain Name Security Extensions" NETWORK WORKING GROUP, March 1999 (1999-03), XP002174063

## Description

### FIELD OF THE INVENTION

The invention relates to additional information needed in connection setup between servers, and particularly to delivering such information so as to enable connetion setup.

### BACKGROUND OF THE INVENTION

In telecommunication, the role of mobile communication systems is increasingly emphasized. A mobile coomunication system commonly refers to any telecommunication system which enables communication while users move within the service area of the system. The most important service of a mobile communication system is thus to enable a subscriber to call and to be called, irrespective of the location of the subscriber in the coverage area of the system. Network interworking and roaming among the networks of different operators are thus basic requirements for enabling use of various services, such as forthcoming wireless Internet services, when a user roams the networks of other operators. In connection with interworking and roaming, it is also to be taken into account that in addition to mobile communication networks, such as networks based on a GSM system, wireless local area networks WLAN and a combination of wireless local area networks and mobile communication networks may also be used in a mobile communication system so as to enable a mobile communication network to be utilized via a wireless local area network.

When a user resides in the area of a visited network, typically, he or she is authenticated into a home network via the visited network before the user is allowed to access the services of the network. Therefore, the authentication servers or the like of the home network and the visited network deliver authentication requests and other authentication-related messages to one another. However, the user's secret identifier or the like used in authentication cannot be delivered as cleartext from a server to another. A transfer e.g. between RADIUS servers takes place such that the RADIUS servers either verify each other on the basis of a common shared secret or transmit the information by utilizing a common shared secret key known to these servers only.

A problem with the aforementioned arrangement is that for common shared secrets, each operator itself has to maintain in its own network separately statically configured lists of different servers and the related secrets. Such lists are difficult to maintain, particularly when there are hundreds of roaming partner operators. If, for example, operator A changes its RADIUS server address, operator A must send the new address to other operators, and each of them has to update its own list in order to enable a subscriber to operator A to succeed in roaming. The situation is even more difficult if the operator changes a secret, since the new secret has to be delivered to other operators in a reliable manner.

Zao J et al: "A public-key based secure mobile IP" Wireless networks, ACM, US, vol. 5, no. 5, October 1999 (1999-10), pages 373-390, XP000902493 ISSN: 1022-0038 discloses a system in which certificates, with which an identity of a mobile node can be verified during network access, are stored to domain name system and piggybacked onto regular domain name system transactions.

Eastlake D: "RFC 2535 - Domain Name Security Extensions" Network working group, March 1999 (1999-03), XP002174063 discloses domain name system security extensions which provide for the storage of authenticated public keys in the domain name system and their delivery with resource record actually requested from the domain name system.

### BRIEF DESCRIPTION OF THE INVENTION

An object of the invention is thus to provide a method and an apparatus implementing the method so as to enable the aforementioned problem to be solved. The object of the invention is achieved by a method, a domain name server and an authentication server which are characterized by what is disclosed in the independent claims. Preferred embodiments of the invention are disclosed in the dependent claims.

The invention is based on detecting a problem and solving it such that in addition to host, such as an authentication server, address information, additional information is also stored host-specifically in a domain name server maintaining address information on servers, which additional information may be needed in setting up a connection to the host. Such additional information includes at least a shared secret, such as a key. Moreover such additional information may include information related to a transmission protocol to be supported, such as the identifier of a version the host in question, as a receiver, is capable of interpreting, or such additional information may include both the above-disclosed examples and/or other similar information. Here, connection setup refers to setting up a state which enables information to be transmitted from one server to another.

An advantage of the method and system of the invention is that not even the additional information has to be stored in a system more than once, and each operator included in the system receives it from the same server as the address information. A further advantage is that a need to mai n-tain a statically configured list of additional information in each network is avoided and many problems concerning the distribution of a key are avoided. Such problems include arranging reliable distribution of changed keys to partners and entering a changed key into the system of an interworking partner, which takes place manually and is thus a slow process prone to errors. Since the additional information resides in a domain name server, a need to build a separate infrastructure only for storing and retrieving additional information, such as keys, is avoided.

In a preferred embodiment of the invention, the domain name server is a server of a closed system. The advantage is that secret information can be maintained and distributed in a simple manner.

### BRIEF DESCRIPTION OF THE DRAWINGS

The invention is now described in closer detail in connection with the preferred embodiments and with reference to the accompanying drawings, in which

Figure 1 is a simplified block diagram of the architecture of an exemplary system;

Figure 2 shows signalling in an exemplary embodiment of the invention; and

Figure 3 shows signalling in a second exemplary embodiment of the invention.

### DETAILED DESCRIPTION OF THE INVENTION

The present invention can be applied in connection with any telecommunication system which supports roaming wherein additional information is needed for connection setup between different servers. Such systems include e.g. systems wherein a wireless local area network is connected to a wide area network, such as a common mobile communication network. Such a wireless local area network may be e.g. a network of the IEEE 802.11 or HIPERLAN type which uses a radio interface, such as Bluetooth, infrared or another corresponding wireless access technology as the transmission path of an air interface. A wide area network may be based e.g. on systems called third generation mobile communication systems, such as UMTS, and systems based thereon, as well as on a GSM system and similar mobile communication systems, such as GSM 1800 and PCS (Personal Communication System), and systems based on the aforementioned systems, such as GSM 2+ systems. The invention may also be applied when utilizing another wireless system, a fixed system, a mere mobile communication system or a combination of several systems wherein e.g. one of the systems may be based on a fixed system while the rest of the systems are based on a wireless system.

In the following, the invention will be described by using a GRX (GPRS Roaming Exchange) system as an exemplary system without restricting the invention thereto. The GRX comprises e.g. a centralized IP (Internet Protocol) routing network which connects networks of different operators and enables roaming. It is used e.g. for implementing WLAN roaming and GPRS roaming, particularly when the visited network comprises a WLAN network as a local area network providing access to the visited network. One property of the GRX is that it enables a closed system to be implemented. Specifications of telecommunication systems, and those of wireless telecommunication systems in particular, develop rapidly. Such development may require additional changes in the invention. Therefore, all words and expressions should be interpreted broadly, and they are only intended to describe, not to restrict, the invention. As far as the invention is concerned, the relevant point is the function rather than the fact in which network node the invention resides.

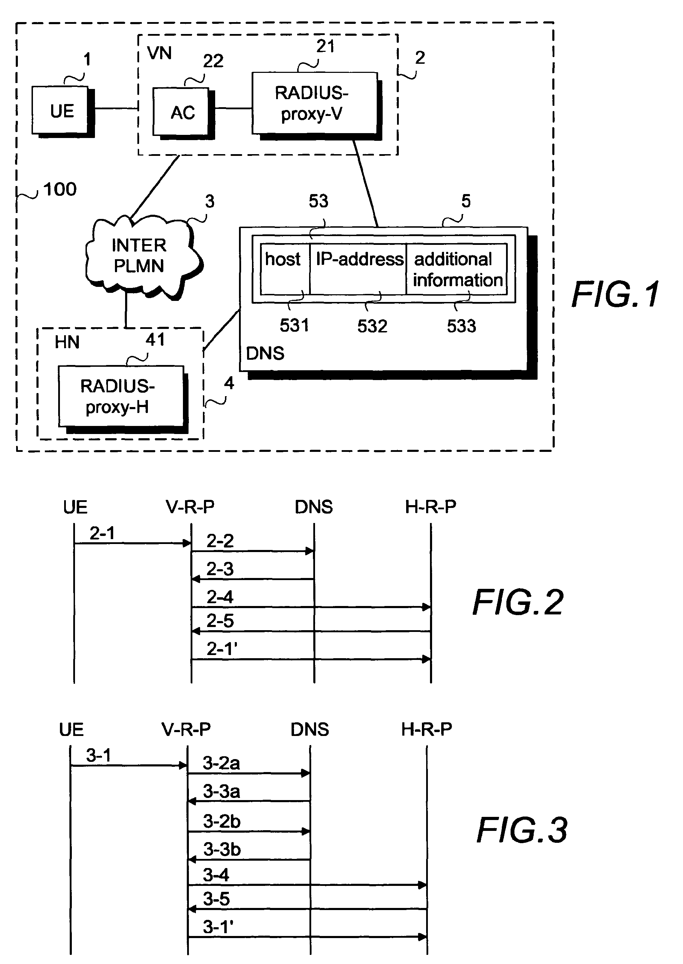

Figure 1 shows a simplified network architecture which shows only some of the elements of an exemplary system architecture. The network nodes shown in Figure 1 are logical units whose implementation may differ from the shown one. It is obvious to one skilled in the art that the system may also comprise other functions and structures that need not be described in detail herein.

The exemplary system 100 of Figure 1 comprises user equipment UE 1, a visited network VN 2, an internal network 3 between network operators to enable a connection to be set up from the visited network VN 2 to a home network HN 4 of the user equipment, and a domain name server DNS 5.

In this context, the user equipment UE 1 generally refers to an entity constituted by a subscriber and the actual terminal equipment. The terminal equipment may be any terminal equipment or a combination thereof capable of communicating in the system 100. The terminal equipment may be e.g. a portable computer or a mobile telephone. The user equipment UE 1 is connected to the system via base transceiver stations of the visited network VN 2 (not shown in the figure).

The visited network VN 2 comprises one or more network access controls AC 22 arranged e.g. to authenticate the user equipment into the home network via an authentication server of the visited network.

The visited network VN 2 further comprises an authentication server RADIUS-proxy-V 21. It is a RADIUS server, i.e. a server for identification, access control, setting information delivery and/or user statistics, which uses a RADIUS protocol. The AC 22 may ask it for authentication of the user equipment UE 1, information about use settings and/or user rights of the user equipment. Among other things, the RADIUS-proxy-V delivers service requests to other servers, such as to a corresponding server of the home network HN 5 of the terminal equipment UE 1. The RADIUS-proxy-V does not participate in the actual authentication of roaming user equipment except by delivering messages, but it may participate in collecting and transferring billing data.

In the example of Figure 1, the network 3 is a centralized IP routing network which connects the networks of different operators and enables roaming. Preferably, the network 3 is a closed network which is meant for operators agreed on roaming arrangements and to which no outsiders have access.

The home network HN 4 comprises a Radius authentication server RADIUS-proxy-H 41 wherein the authentication information e.g. on a subscriber to a home network, i.e. the user, may reside. The RADIUS-proxy-H participates e.g. in the actual authentication of home user equipment roaming in some other network.

The domain name server DNS 5 comprises resolver software capable of converting the domain names, i.e. area names, used on the Internet into numeric IP addresses and vice versa in accordance with a DNS (Domain Name System) known to one skilled in the art. An area name identifies a host, i.e. a specific server or a server group. The DNS 5 is a decentralized directory and it describes a name service hierarchy which enables the domain name server of the name area of each operator to be found, the domain name server maintaining information on local names and in which domain name server the operator e.g. updates IP addresses and additional information so that they do not have to be updated elsewhere.

In the exemplary system, the DNS 5 comprises host-specific data fields 53 which include a host 531, a numeric IP address 532 and various records, at least one of which 533 comprises additional information according to the invention. In the exemplary system shown in Figure 1, all additional information is added to a non-structured text record TXT 533. Preferably, the additional information has been added using a mutually agreed-upon format. For example, a key used as a shared secret could be of the format "Key = hippa" to operator A. This is then used as a shared secret when setting up a connection to an IP address corresponding with the area name of operator A. In some other embodiments, a specific record may have been determined for the additional information, or a specific record may have been determined for each additional information type, or e.g. a shared secret has been added to a non-built text record, and a specific record has been determined for the protocol version and/or a specific record has been determined for other additional information.

Since the exemplary system is a closed system, i.e. a system differentiated from the Internet, the hierarchy of the domain name server DNS includes a "root". Therefore, from the point of view of the network operators, the system is reliable and information-secure. In the present description, the DNS generally illustrates an address conversion server which operates on the same principle as a DNS of the Internet.

Utilizing a domain name server provides the advantage that when an operator e.g. changes the additional information or an IP address, this is only updated on the operator's own domain name server, and when such information is needed the next time, the DNS will find it.

Figure 2 shows signalling and operation of servers in accordance with an exemplary embodiment of the invention. User equipment UE is e.g. switched on within the area of a base transceiver station of a visited network, and its registration process begins. In Figure 2, the process starts at a stage where a registration request 2-1 is received at a RADIUS proxy V-R-P of the visited network. The previous stages are irrelevant to the invention and well known to one skilled in the art, so they do not have to be described in closer detail herein. In this example, the registration request 2-1 includes information needed in the authentication of the user of the user equipment, i.e. a user name and a password, for example. Directly or indirectly, the user name indicates the area name of a home network and is e.g. of the format *fore-name.lastname@operatorA.xyz.* Depending on the implementation, the user name may also indicate a single server or a server group.

After receiving the message 2-1, the V-R-P, using prior art methods, for example, finds out from the user name whether the user is a user in the home network or whether the user is a roamer. In this example, the user is a roamer, and the V-R-P sends a query in a message 2-2 to a domain name server DNS. The query includes the area name indicated by the user name.

In this embodiment of the invention, the DNS searches its hierarchy for a data field corresponding with the area name included in the query 2-2, picks up the IP address and the additional information therefrom and sends them to the V-R-P in a message 2-3.

After receiving the information, the V-R-P separates the IP address and the additional information from the message 2-3 and sends a message 2-4 to the IP address, i.e. in this example to the RADIUS proxy H-R-P of the home network of the user. The message 2-4 includes the additional information separated from the message 2-3, e.g. a shared secret. The H-R-P verifies the V-R-P on the basis of the shared secret and in a message 2-5 sends information indicating that a connection is set up between the RADIUS proxies of the visited network and the home network.

After the connection has been set up, the V-R-P sends a message 2-1' to the H-R-P for authenticating the user. The message 2-1' includes the information needed in the authentication of the user of the user equipment that was included in the message 2-1.

An advantage of this embodiment is that a single database query is enough in order to find out both the IP address and the necessary additional information.

Depending on the implementation, in the above-described embodiment the DNS may have been configured to always send the additional information as well in response to a query or only if additional information is asked for in the query (message 2-2). In the latter implementation, the V-R-P is preferably configured to recognize situations wherein additional information is asked for and to indicate in a query message that in addition to the address, additional information is also desired. This can be carried out e.g. by using a different message or by adding e.g. an indicator to the query to indicate whether additional information is desired or not, or a combination thereof. An indicator may also consist of the fact that a query includes no area name but an IP address. Each piece of additional information may also be provided with a special message or a special indicator. Correspondingly, in these embod i-ments the DNS has to be configured to identify from the query which information is desired.

Figure 3 shows signalling and operation of servers in accordance with a second exemplary embodiment. As in Figure 2, the process in Figure 3 also starts when a registration request 3-1 for registering user equipment UE is received at a RADIUS proxy V-R-P of the visited network. The registration request 3-1 corresponds with the registration request 2-1.

After receiving the message 3-1, the V-R-P, in a similar manner to that described above, finds out whether the user is a user in a home network or whether the user is a roamer. In this example, the user is a roamer, and the V-R-P sends a query in a message 3-2a to a domain name server DNS. The query includes the area name indicated by the user name.

The DNS searches its hierarchy for a data field corresponding with the area name included in the query 3-2, picks up an IP address therefrom and, in this embodiment of the invention, sends it in a message 3-3a. After thus receiving the IP address, the V-R-P sends a new query in a message 3-2b to the domain name server DNS. In the message 3-2b, the V-R-P asks for additional information relating to the IP address. The DNS searches its hierarchy for a data field including a corresponding IP address. After finding such a data field, the DNS picks up the additional information and sends it in a message 3-3b to the V-R-P. The message 3-2b may be the same message as the message 3-2a, in which case the DNS identifies the message 3-2b as a message requesting additional information on the basis of the message including the IP address, or by means of another indicator included therein. Alternatively, the messages 3-2a and 3-2b may be different messages. Each piece of additional information may also be provided with a special message or a special indicator. Correspondingly, in these implementations, the DNS has to be configured to identify from the query which information is desired.

After receiving the information, the V-R-P separates the additional information, e.g. a shared secret, from the message 3-3b and sends it in a message 3-4 to the IP address included in the message 3-3a, i.e. in this example to the server, i.e. the RADIUS proxy H-R-P, of the home network of the user. The H-R-P verifies the V-R-P on the basis of the shared secret and in a message 3-5 sends information indicating that a connection is set up between the RADIUS proxies of the visited network and the home network.

After the connection has been set up, the V-R-P sends a message 3-1' to the H-R-P for authenticating the user. The message 3-1' includes the information needed in the authentication of the user of the user equipment that was included in the message 3-1.

Although the invention has been described above assuming that that the additional information is a shared secret, it is obvious to one skilled in the art that the additional information may include a piece of information other than a shared secret or a key, in addition thereto. Such information includes e.g. the version of a transmission protocol supported by the H-R-P. If the version does not support the version used by the V-R-P by default, the V-R-P may have been configured to change the version of its transmission protocol to conform with the supported version.

In an embodiment of the invention, the embodiments described in Figures 2 and 3 can be combined such that the DNS is configured to return, in connection with a first query, the secret needed in connection setup between servers, and the V-R-P is configured in connection with a second query to separately ask for another piece of necessary additional information, e.g. if it does not succeed in delivering the message to the H-R-P.

Although the invention has been described above as a closed system wherein the DNS does not have to check whether the sender of a query has a right to be given additional information, the DNS may be configured to check this. For example, if a server has asked a DNS server to resolve the area name and in a reply wishes to receive two parameters A and B, such as an IP address and a secret, and the records of the DNS server have an entry indicating that the particular area name cannot be accessed without parameter C, the DNS server may also add parameter C to its reply and/or inform in its reply that parameter C is also needed.

The messages disclosed above in connection with Figures 2 and 3 are only suggestive and may contain several separate messages in order to deliver the same information. In addition, the messages may also comprise other information. Other messages may also be transmitted between the messages. Some of the messages may also be omitted. For example, if the additional information is a version of a protocol supported by a receiver, the sender (i.e. the V-R-P) is configured to send the information in a message 2-1' or 3-1' by means of a message in accordance with the supported version, and no messages 2-4 and 2-5 or 3-4 and 3-5 are necessarily sent. In an embodiment, a network node is configured to ask for additional information needed in connection setup from the domain name server in response to unsuccessful connection setup. Depending on the operators and the system, other network nodes into which different functionalities have been decentralized may also participate in delivering information and signalling.

Although the invention has been described above in connection with RADIUS proxies, it is obvious to one skilled in the art that the invention may also be applied to connections between other servers, e.g. in connection with servers used for implementing a VPN (Virtual Private Network) technology. Above, the RADIUS proxies are only examples of servers that need additional information in order to set up a connection between a server of a visited network and a corresponding server in a home network.

Although the invention has been described above mainly in connection with delivering secrets, the invention may also be applied to all additional information which e.g. in the prior art solutions, in addition to an IP address query, has to be retrieved from a statically configured list. An example of such additional information is that the area names residing in a DNS server are divided into at least two groups and the DNS, together with an IP address corresponding with the area name, also returns information indicating to which group this area belongs. If a network node is only allowed to communicate with entities belonging to the same group, the network node which asked for the IP address may, on the basis of this group information, conclude whether or not the particular entity belongs to the same group, i.e. whether or not it is allowed to communicate therewith.

Although the invention has been disclosed above describing connection setup between servers of a visited network and a home network, it is obvious to one skilled in the art how the invention is applied to connection setup between different servers in the same network, such as between two RADIUS servers in the same network.

In addition to the means necessary for implementing connection setup between prior art servers, the telecommunication system, network nodes and domain name servers implementing the functionality in accordance with the present invention each comprise means for finding out, from the domain name server, the additional information needed in connection setup. More precisely, they comprise means for implementing at least one above-described embodiment. Contemporary network nodes and domain name server comprise processors and memory that can be utilized in the functions according to the invention. All changes and configurations required for implementing the invention can be carried out as added or updated software routines, and/or with application circuits (ASIC). The domain name servers may also need additional memory.

It is obvious to one skilled in the art that as technology advances, the basic idea of the invention can be implemented in various different ways. The invention and its embodiments are thus not restricted to the above-described examples but may vary within the scope of the claims.

## Claims

1. A method of delivering additional information in a telecommunication system comprising at least two authentication servers (21, 41) and a domain name server (5) for converting the addresses of the authentication servers (21, 41) from a first format to a second format, **characterized by**
maintaining, at the domain name server, authentication server - specifically authentication server -related additional information (533) needed in a connection setup to the authentication server in question from another authentication server, the additional information induing at least a shared secret to be used by the authentication server in question and the other authentication server;
receiving (2-2) a query at the domain name server;
sending (2-3) a response to the query, the response including at least the shared secret from the additional information.

2. A method as claimed in claim **characterized in that** the query includes a first address and asks for a second address, and the second address and the additional information are sent (2-3) in the response.

3. A method as claimed in claim 1, **characterized in that** additional information is sent (2-3) only if the query, directly or indirectly, indicates that additional information is asked for.

4. A method as claimed in claim 3, **characterized in that** if the query (2-2) includes a second address, the query asks for additional information.

5. A method as claimed in any one of the preceding claims, **characterized in that** the additional information further includes additional information needed in the connection setup between authentication servers.

6. A method as claimed in any one of the preceding claims, **characterized in that** the query is sent (2-2) in response to an unsuccessful connection setup.

7. A method as claimed in any one of the preceding claims, **characterized in that** at least some of the additional information relates to a protocol supported by the authentication.

8. A domain name server (5) for a telecommunication system comprising at least two authentication servers (21, 41), the domain name server being configured to convert the addresses of the authentication servers from a first format to a second format, **characterized in that** the domain name server (5) is configured to maintain, authentication-spedficaiiy (53), authentication-related additional information (533) needed in a connection setup to the authentication server in question from another authentication server, the additional information including at least a shared secret to be used by the authentication server in question and the other authentication server, and, in response to a query, to send in its response at least the shared secret from the additional information.

9. A domain name server as claimed in claim 8, **characterized in that** the domain name server (5) is configured to separate queries relating to address conversion from queries relating to additional information, and to send additional information in response to a query relating to additional information.

10. A domain name server as claimed in claim 8 or 9, **characterized in that** the domain name server (5) is a domain name server of a closed system.

11. An authentication server (21) for a telecommunication system (100), said system comprising at least another authentication server (41) and a domain name server (5) for converting the addresses of the authentication servers (21,41) from a first format to a second format, **characterized in that** the authentication server (21) is configured to ask, from the domain name server, for authentication server - related additional information (533) needed in a connection setup from the authentication server to the other authentication server, the additional information including at least a shared secret, to receive as the additional information at least a shared secret to be used with the other authentication server, and to use the shared secret in the connection setup.

12. An authentication server as claimed in claim 11, **characterized in that** the authentication server (21) is configured to ask for additional information in response to setting up a connection to a authentication server of another network.

13. An authentication server as claimed in claim 11 or 12, **characterized in that** the authentication server (21) is configured to ask for additional information in response to unsuccessful connection setup.

## Patentansprüche

1. Verfahren zur Lieferung von Zusatzinformationen in einem Telekommunikationssystem, das zumindest zwei Authentifizierungsserver (21, 41) und einen Domain-Name-Server (5) zur Umsetzung der Adressen der Authentifizierungsserver (21, 41) von einem ersten Format in ein zweites Format aufweist,**gekennzeichnet durch**
Verwaltung von authentifizierungsserverbezogenen Zusatzinformationen (533) authentifizierungsserverspezifisch auf dem Domain-Name-Server, die für einen Verbindungsaufbau zum betreffenden Authentifizierungsserver von dem anderen Authentifizierungsserver notwendig sind, wobei die Zusatzinformationen zumindest ein geteiltes Geheimnis umfassen, das von dem betreffenden Authentifizierungsserver und dem anderen Authentifizierungsserver benutzt wird;
Empfangen (2-2) einer Abfrage auf dem Domain-Name-Server;
Senden (2-3) einer Antwort auf die Abfrage, welche Antwort zumindest das geteilte Geheimnis von den Zusatzinformationen umfasst.

2. Verfahren nach Anspruch 1, **dadurch gekennzeichnet, dass** die Abfrage eine erste Adresse umfasst und um eine zweite Adresse bittet und die zweite Adresse und die Zusatzinformationen in der Antwort gesendet werden (2-3).

3. Verfahren nach Anspruch 1, **dadurch gekennzeichnet, dass** Zusatzinformationen nur gesendet werden (2-3), falls die Abfrage direkt oder indirekt angibt, dass um Zusatzinformationen gebeten werden.

4. Verfahren nach Anspruch 3, **dadurch gekennzeichnet, dass**, falls die Abfrage (2-2) eine zweite Adresse umfasst, die Abfrage um Zusatzinformationen bittet.

5. Verfahren nach einem der vorhergehenden Ansprüche, **dadurch gekennzeichnet, dass** die Zusatzinformationen weiterhin Zusatzinformationen umfassen, die für den Verbindungsaufbau zwischen Authentifizierungsservern notwendig sind.

6. Verfahren nach einem der vorhergehenden Ansprüche, **dadurch gekennzeichnet, dass** die Abfrage als Antwort auf einen erfolglosen Verbindungsaufbau gesendet wird (2-2).

7. Verfahren nach einem der vorhergehenden Ansprüche, **dadurch gekennzeichnet, dass** sich zumindest ein Teil der Zusatzinformationen auf ein von der Authentifizierung unterstütztes Protokoll bezieht.

8. Domain-Name-Server (5) für ein Telekommunikationssystem, das zumindest zwei Authentifizierungsserver (21, 41) aufweist, wobei der Domain-Name-Server konfiguriert ist, die Adressen der Authentifizierungsserver von einem ersten Format in ein zweites Format umzusetzen, **dadurch gekennzeichnet, dass** der Domain-Name-Server (5) konfiguriert ist, authentifizierungsbezogene Zusatzinformationen (533) authentifizierungsspezifisch (53) zu verwalten, die für einen Verbindungsaufbau zum betreffenden Authentifizierungsserver von dem anderen Authentifizierungsserver notwendig sind, wobei die Zusatzinformationen zumindest ein geteiltes Geheimnis umfassen, das von dem betreffenden Authentifizierungsserver und dem anderen Authentifizierungsserver benutzt wird, und als Antwort auf eine Abfrage zumindest das **ge**teilte Geheimnis von den Zusatzinformationen in seiner Antwort zu senden.

9. Domain-Name-Server nach Anspruch 8, **dadurch gekennzeichnet, dass** der Domain-Name-Server (5) konfiguriert ist, mit Adressenumsetzung zusammenhängende Abfragen von mit Zusatzinformationen zusammenhängenden Abfragen abzutrennen und Zusatzinformationen als Antwort auf eine mit Zusatzinformationen zusammenhängende Abfrage zu senden.

10. Domain-Name-Server nach Anspruch 8 oder 9, **dadurch gekennzeichnet, dass** der Domain-Name-Server (5) ein Domain-Name-Server eines geschlossenen Systems ist.

11. Authentifizierungsserver (21) für ein Telekommunikationssystem (1), das zumindest einen anderen Authentifizierungsserver (41) und einen Domain-Name-Server (5) zur Umsetzung der Adressen der Authentifizierungsserver (21, 41) von einem ersten Format in ein zweites Format aufweist, **dadurch gekennzeichnet, dass** der Authentifizierungsserver (21) konfiguriert ist, den Domain-Name-Server um authentifizierungsserverbezogene Zusatzinformationen (533) zu bitten, die für einen Verbindungsaufbau vom Authentifizierungsserver zum anderen Authentifizierungsserver notwendig sind, wobei die Zusatzinformationen zumindest ein geteiltes Geheimnis umfassen, zumindest ein mit dem anderen Authentifizierungsserver zu benutzendes geteiltes Geheimnis als Zusatzinformationen zu empfangen und das geteilte Geheimnis bei dem Verbindungsaufbau zu benutzen.

12. Authentifizierungsserver nach Anspruch 11, **dadurch gekennzeichnet, dass** der Authentifizierungsserver (21) konfiguriert ist, um Zusatzinformationen als Antwort darauf zu bitten, dass eine Verbindung zu einem Authentifizierungsserver eines anderen Netzwerks aufgebaut wird.

13. Authentifizierungsserver nach Anspruch 11 oder 12, **dadurch gekennzeichnet, dass** der Authentifizierungsserver (21) konfiguriert ist, um Zusatzinformationen als Antwort auf einen erfolglosen Verbindungsaufbau zu bitten.

## Revendications

1. Procédé de remise d'informations supplémentaires dans un système de télécommunication qui comprend au moins deux serveurs d'authentification (21, 41) et un serveur de nom de domaine (5) destiné à convertir les adresses des serveurs d'authentification (21, 41) à partir d'un premier format vers un second format, **caractérisé par** les étapes consistant à :
mettre à jour, au niveau du serveur de nom de domaine, des informations supplémentaires (533) spécifiques à un serveur d'authentification, qui se rapportent à un serveur d'authentification, nécessaires à l'établissement d'une connexion vers le serveur d'authentification en question à partir d'un autre serveur d'authentification, les informations supplémentaires comprenant au moins un secret partagé à utiliser par le serveur d'authentification en question et l'autre serveur d'authentification ;
recevoir (2 - 2) une requête au niveau du serveur de nom de domaine ;
envoyer (2 - 3) une réponse à la requête, la réponse comprenant au moins le secret partagé à partir des informations supplémentaires.

2. Procédé selon la revendication 1, **caractérisé en ce que** la requête comprend une première adresse et demande une deuxième adresse, et la deuxième adresse et les informations supplémentaires sont envoyées (2 - 3) dans la réponse.

3. Procédé selon la revendication 1, **caractérisé en ce que** les informations supplémentaires ne sont envoyées (2 - 3) que si la requête indique, de manière directe ou indirecte, que des informations supplémentaires sont demandées.

4. Procédé selon la revendication 3, **caractérisé en ce que**, si la requête (2 - 2) comprend une deuxième adresse, la requête demande des informations supplémentaires.

5. Procédé selon l'une quelconque des revendications précédentes, **caractérisé en ce que** les informations supplémentaires comprennent en outre des informations supplémentaires nécessaires à l'établissement d'une connexion entre les serveurs d'authentification.

6. Procédé selon l'une quelconque des revendications précédentes, **caractérisé en ce que** la requête est envoyée (2 - 2) en réponse à l'échec de l'établissement d'une connexion.

7. Procédé selon l'une quelconque des revendications précédentes, **caractérisé en ce que** certaines au moins des informations supplémentaires se rapportent à un protocole pris en charge par l'authentification.

8. Serveur de nom de domaine (5) d'un système de télécommunication qui comprend au moins deux serveurs d'authentification (21, 41), le serveur de nom de domaine étant configuré de manière à convertir les adresses des serveurs d'authentification à partir d'un premier format vers un second format, **caractérisé en ce que** le serveur de nom de domaine (5) est configuré de manière à mettre à jour des informations supplémentaires (533) spécifiques à un serveur authentification (53), qui se rapportent à un serveur d'authentification, nécessaires à l'établissement d'une connexion vers le serveur d'authentification en question à partir d'un autre serveur d'authentification, les informations supplémentaires comprenant au moins un secret partagé à utiliser par le serveur d'authentification en question et l'autre serveur d'authentification, et, en réponse à une requête, à envoyer dans sa réponse au moins le secret partagé à partir des informations supplémentaires.

9. Serveur de nom de domaine selon la revendication 8, **caractérisé en ce que** le serveur de nom de domaine (5) est configuré de manière à séparer les requêtes qui se rapportent à la conversion d'adresses, des requêtes qui se rapportent à des informations supplémentaires, et à envoyer les informations supplémentaires en réponse à une requête qui se rapporte à des informations supplémentaires.

10. Serveur de nom de domaine selon la revendication 8 ou la revendication 9, **caractérisé en ce que** le serveur de nom de domaine (5) est un serveur de nom de domaine d'un système fermé.

11. Serveur d'authentification (21) d'un système de télécommunication (100), ledit système comprenant au moins un autre serveur d'authentification (41) et un serveur de nom de domaine (5) destiné à convertir les adresses des serveurs d'authentification (21, 41) à partir d'un premier format vers un second format, **caractérisé en ce que** le serveur d'authentification (21) est configuré de manière à demander, à partir du serveur de nom de domaine, des informations supplémentaires (533) qui se rapportent au serveur d'authentification nécessaires à l'établissement d'une connexion à partir du serveur d'authentification vers l'autre serveur d'authentification, les informations supplémentaires comprenant au moins un secret partagé, à recevoir comme informations supplémentaires au moins un secret partagé à utiliser avec l'autre serveur d'authentification, et à utiliser le secret partagé dans l'établissement d'une connexion.

12. Serveur d'authentification selon la revendication 11, **caractérisé en ce que** le serveur d'authentification (21) est configuré de manière à demander des informations supplémentaires en réponse à l'établissement d'une connexion vers un serveur d'authentification d'un autre réseau.

13. Serveur d'authentification selon la revendication 11 ou la revendication 12, **caractérisé en ce que** le serveur d'authentification (21) est configuré de manière à demander des informations supplémentaires en réponse à l'échec de l'établissement d'une connexion.
